# EUROPEAN PATENT SPECIFICATION

(11) **EP 3 633 071 B1**
(45) Date of publication and mention of the grant of the patent: **04.06.2025**
(21) Application number: 18806725.0
(22) Date of filing: 02.04.2018
(51) Int. Cl.: C25B 9/00, C22B 11/00

(54) **ORGANIC HYDRIDE PRODUCTION**
PRODUKTION VON ORGANISCHEM HYDRID
PRODUCTION D'HYDRURE ORGANIQUE

(30) Priority: 23.05.2017 JP 2017101419
(43) Date of publication of application: 08.04.2020
(73) Proprietor: National University Corporation Yokohama National University, Yokohama-shi, Kanagawa 240-8501 (JP); De Nora Permelec Ltd, Fujisawa-shi, Kanagawa 252-0816 (JP)
(72) Inventor: MITSUSHIMA Shigenori, Yokohama-shi Kanagawa 240-8501 (JP); NAGASAWA Kensaku, Yokohama-shi Kanagawa 240-8501 (JP); NISHIKI Yoshinori, Fujisawa-shi Kanagawa 252-0816 (JP); OGATA Setsuro, Fujisawa-shi Kanagawa 252-0816 (JP); KATO Akihiro, Fujisawa-shi Kanagawa 252-0816 (JP); ZAENAL Awaludin, Fujisawa-shi Kanagawa 252-0816 (JP); MATSUOKA Koji, Tokyo 100-8162 (JP); SATO Yasushi, Tokyo 100-8162 (JP)
(74) Representative: Algemeen Octrooi- en Merkenbureau B.V.
(86) International application number: PCT/JP2018/014110
(87) International publication number: WO 2018/216356

(56) References cited:
- EP-A1- 3 124 651
- WO-A1-2015/029366
- WO-A1-2016/076277
- WO-A1-2016/077433
- JP-A- 2016 098 410

## Description

### [TECHNICAL FIELD]

The present invention relates to a use of an organic hydride production apparatus for producing an organic hydride according to the preamble of claim 1. The present invention particularly relates to a use of an organic hydride production apparatus producing an organic hydride by electrochemically hydrogenating a hydrogenation target substance.

### [BACKGROUND ART]

In recent years, widespread use of renewable energy, obtained by solar power generation, wind power generation, hydropower generation, geothermal power generation, and the like, is desired because the renewable energy is considered as new energy that can be generated with less carbon dioxide emissions, compared to energy obtained by thermal power generation. However, for such renewable energy, moderation of output fluctuations, especially the intermediate and long-period output fluctuations, is required. Also, large-scale transportation of renewable energy is relatively difficult. Meanwhile, electric power obtained from renewable energy can be effectively converted into chemical energy. For processes for directly converting electric power into chemical energy, electrochemical systems can be used. Secondary cells, or storage batteries, are examples of electrochemical systems and are devices widely used to convert electric power into chemical energy and store the chemical energy.

As an electrochemical system based on renewable energy, there is a promising system in which large-scale solar power or wind power generation systems are installed in appropriate locations around the world, and renewable energy obtained therefrom is converted into an energy carrier appropriate for transportation, so as to be transported into a country and consumed domestically. The energy carrier may be liquid hydrogen, for example. However, since hydrogen is gaseous at ordinary temperatures and pressures, special tankers are required for transportation and storage thereof.

In such a situation, attention is given to organic hydrides (organic chemical hydrides) as energy carriers alternative to liquid hydrogen. Organic hydrides may be cyclic organic compounds, such as cyclohexane, methylcyclohexane, and decalin. Organic hydrides are generally liquid at ordinary temperatures and pressures, and hence can be easily handled. Also, organic hydrides can be electrochemically hydrogenated and dehydrogenated. Accordingly, when an organic hydride is used as an energy carrier, it can be transported and stored more easily than liquid hydrogen. Particularly, when a liquid organic hydride having properties similar to those of petroleum is selected, since it has excellent compatibility with relatively large-scale energy supply systems, the liquid organic hydride has the advantage of being easily distributed to ends of such energy supply systems.

As a method for producing an organic hydride, a method is conventionally known in which hydrogen is produced by water electrolysis using renewable energy and is added to a hydrogenation target substance (dehydrogenated product of an organic hydride) in a hydrogenation reactor, thereby producing an organic hydride.

Meanwhile, when an electrolytic synthesis method is used, since hydrogen can be directly added to a hydrogenation target substance, the processes for organic hydride production can be simplified. In addition, the efficiency loss is small regardless of the production scale, and excellent responsiveness to the start and stop operations of the organic hydride production apparatus can be seen. With regard to a technology for such organic hydride production, for example, Patent Document 1 discloses an organic hydride production apparatus that includes an anode for producing protons from water, and a cathode for hydrogenating an organic compound having an unsaturated bond.

### [PRIOR ART REFERENCE]

### [PATENT LITERTURE]

[Patent Literature 1] WO 2012/091128
[Patent Literature 2] EP-A1-3124651 describes an organic hydride production apparatus according to the preamble of claim 1;
[Patent Literature 3] JP 2016-098410 describes an organic hydride production apparatus according to the preamble of claim 1;
[Patent Literature 4] WO 2016/076277 describes an organic hydride production apparatus according to the preamble of claim 1.

### [SUMMARY OF INVENTION]

### [TECHNICAL PROBLEM]

As a result of intensive study regarding the abovementioned technology for organic hydride production, the inventors have found that there is room for improving the efficiency of organic hydride production in the conventional technologies.

The present invention has been made in view of such a situation, and a purpose thereof is to provide a technology for improving efficiency of organic hydride production.

### [SOLUTION TO PROBLEM]

One aspect of the present invention is a use of an organic hydride production apparatus for producing an organic hydride as outlined in claim 1. The organic hydride production apparatus as used in claim 1 includes: an electrolyte membrane having proton conductivity; a cathode, provided on one side of the electrolyte membrane, that contains a cathode catalyst used to hydrogenate a hydrogenation target substance using protons to produce an organic hydride; an anode, provided opposite to the one side of the electrolyte membrane, that contains an anode catalyst used to oxidize water to produce protons; and an anode support, provided opposite to the electrolyte membrane side of the anode, that supports the anode. The anode support is formed of an elastic porous body of which the Young's modulus is greater than 0.2 N/mm² or greater and 4 N/mm²less than 43 N/mm².

### [ADVANTAGEOUS EFFECTS OF INVENTION]

The present invention enables improvement in efficiency of organic hydride production.

### [BRIEF DESCRIPTION OF DRAWINGS]

Embodiments will now be described, by way of example only, with reference to the accompanying drawings which are meant to be exemplary, not limiting, and wherein like elements are numbered alike in several Figures, in which:
FIG. 1 is a sectional view that shows a schematic structure of an organic hydride production apparatus according to an embodiment;
FIG. 2A shows an anode support and a cell voltage in an organic hydride production apparatus according to each of Test Examples 1-11; FIG. 2B is a diagram used to describe long way of mesh LW, short way of mesh SW, and a strand width ST; FIG. 2C shows relationships between the Young's modulus of the anode support and the cell voltage;
FIG. 3A shows thicknesses of an electrolyte membrane and an anode included in the organic hydride production apparatus according to each of Test Examples 2 and 12-14, a ratio of the thicknesses, and a cell voltage; FIG. 3B shows relationships between the ratio of the thicknesses and the cell voltage;
FIG. 4A shows mesh dimensions of the anode and a cell voltage in the organic hydride production apparatus according to each of Test Examples 15-19; and FIG. 4B shows relationships between an average value of the long way of mesh LW and the short way of mesh SW, and the cell voltage.

### [DESCRIPTION OF EMBODIMENTS]

In the following, the present invention will be described based on a preferred embodiment with reference to the drawings. Embodiments of the invention are provided for purposes of illustration and not limitation, and it should be understood that not all of the features or combinations thereof described in the embodiments are necessarily essential to the invention. Like reference characters denote like or corresponding constituting elements, members, and processes in each drawing, and repetitive description will be omitted as appropriate. Also, the scale or shape of each component shown in each drawing is set for the sake of convenience to facilitate the explanation and is not to be regarded as limitative unless otherwise specified. Further, when the terms "first", "second", and the likes are used in the present specification or claims, such terms do not imply any order or importance and are used to distinguish one configuration from another, unless otherwise specified.

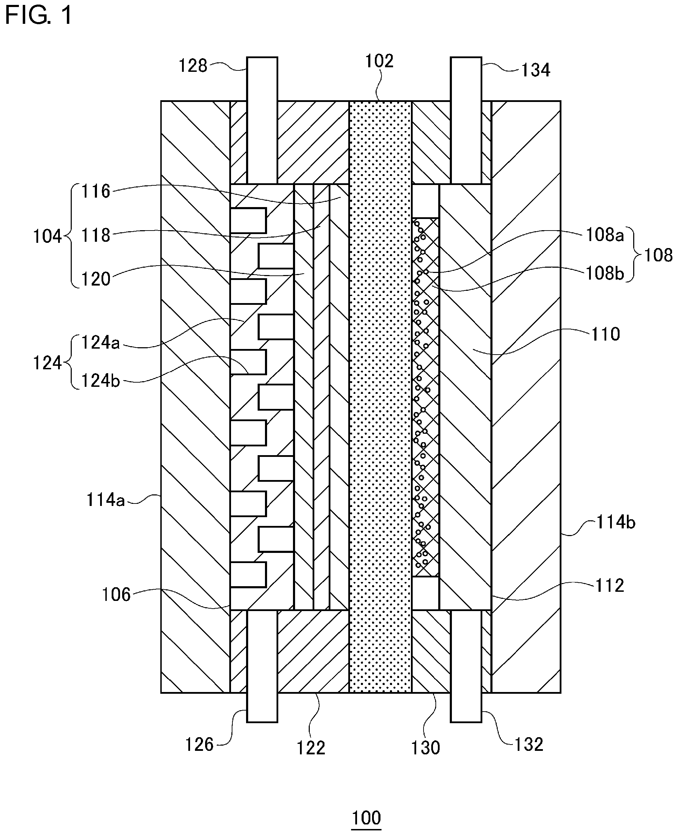

FIG. 1 is a sectional view that shows a schematic structure of an organic hydride production apparatus implemented in the use of that organic hydride production apparatus as defined in the claims. An organic hydride production apparatus 100 is an electrolysis cell for hydrogenating a hydrogenation target substance, which is a dehydrogenated product of an organic hydride, by an electrochemical reduction reaction, and the organic hydride production apparatus 100 mainly includes an electrolyte membrane 102, a cathode 104, a cathode chamber 106, an anode 108, an anode support 110, an anode chamber 112, and a pair of separators 114a and 114b. The electrolyte membrane 102, cathode 104, and anode 108 constitute a membrane electrode assembly.

The electrolyte membrane 102 is formed of a proton-conducting material (an ionomer). The electrolyte membrane 102 selectively conducts protons while restraining mixture and diffusion of substances between the cathode 104 and the anode 108. The proton-conducting material may be a perfluorosulfonic acid polymer, such as Nafion (registered trademark) and Flemion (registered trademark). The thickness of the electrolyte membrane 102 is not particularly limited, but may preferably be 5-300 µm, more preferably be 10-150 µm, and further preferably be 20-100 µm. By setting the thickness of the electrolyte membrane 102 to 5 µm or greater, the barrier performance of the electrolyte membrane 102 can be ensured, so that cross leakage of the hydrogenation target substance, organic hydride, oxygen, and the like can be restrained more certainly. Also, setting the thickness of the electrolyte membrane 102 to 300 µm or less can prevent excessive increase of ion transfer resistance.

The electrolyte membrane 102 may be mixed with a reinforcement material, such as porous polytetrafluoroethylene (PTFE). Adding a reinforcement material can restrain deterioration of dimension stability of the electrolyte membrane 102. Accordingly, durability of the electrolyte membrane 102 can be improved. Also, crossover of the hydrogenation target substance, organic hydride, oxygen, and the like can be restrained. A surface of the electrolyte membrane 102 may be made hydrophilic by coating the surface with a predetermined inorganic layer, for example.

The cathode 104 is provided on one side of the electrolyte membrane 102. The cathode 104 is provided to be in contact with one main surface of the electrolyte membrane 102. The cathode 104 has a structure in which a cathode catalyst layer 116, a microporous layer 118, and a diffusion layer 120 are laminated in this order. More specifically, the cathode catalyst layer 116 is in contact with the one main surface of the electrolyte membrane 102. The microporous layer 118 is in contact with a main surface of the cathode catalyst layer 116 opposite to the electrolyte membrane 102 side. The diffusion layer 120 is in contact with a main surface of the microporous layer 118 opposite to the cathode catalyst layer 116 side. The microporous layer 118 and the diffusion layer 120 may be omitted as appropriate.

The cathode catalyst layer 116 contains a cathode catalyst (reduction catalyst) used to hydrogenate a hydrogenation target substance using protons to produce an organic hydride. As the cathode catalyst, metal particles of a substance selected from a group including Pt, Ru, Pd, Ir, and an alloy containing at least one of them may be used. The cathode catalyst may be a commercially available product, or may be synthesized according to a publicly-known method. Also, the cathode catalyst may be constituted by a metal composition that contains a first catalyst metal (noble metal) including at least one of Pt, Ru, Pd, and Ir, and one or more kinds of second catalyst metals selected from among Cr, Mn, Fe, Co, Ni, Cu, Zn, Mo, Ru, Sn, W, Re, Pb, and Bi. In this case, the form of the metal composition may be an alloy of the first catalyst metal and the second catalyst metal(s), or an intermetallic compound constituted by the first catalyst metal and the second catalyst metal(s), for example.

The cathode catalyst is supported by a catalyst support made of an electron-conductive material. When the cathode catalyst is supported by a catalyst support, the surface area of the cathode catalyst layer 116 can be increased. Also, cohesion of the cathode catalyst can be restrained. For the catalyst support, an electron-conductive material containing, as a major component, one of porous carbon (such as mesoporous carbon), porous metal, and a porous metal oxide may be used, for example.

The porous carbon may be carbon black, for example, including Ketjenblack (registered trademark), acetylene black, furnace black, and Vulcan (registered trademark). The average particle size of carbon particulates, such as carbon black, may preferably be 0.01-1 µm. The porous metal may be Pt black, Pd black, or Pt metal deposited in a fractal form, for example. The porous metal oxide may be an oxide of Ti, Zr, Nb, Mo, Hf, Ta, or W, for example. Also, for the catalyst support, a porous metal compound, such as a nitride, a carbide, an oxynitride, a carbonitride, or a partially-oxidized carbonitride of metal, such as Ti, Zr, Nb, Mo, Hf, Ta, and W, may also be used.

The catalyst support supporting the cathode catalyst is coated with an ionomer. Accordingly, the ion conductivity of the cathode 104 can be improved. The ionomer may be a perfluorosulfonic acid polymer, for example, including Nafion (registered trademark) and Flemion (registered trademark). Preferably, the cathode catalyst may be partially coated with the ionomer included in the cathode catalyst layer 116. This enables efficient supply of three elements (a hydrogenation target substance, protons, and electrons) necessary for the electrochemical reaction in the cathode catalyst layer 116, to a reaction field.

The thickness of the cathode catalyst layer 116 may preferably be 1-100 µm, and more preferably be 5-30 µm. If the thickness of the cathode catalyst layer 116 is increased, the proton transfer resistance will be increased, and, in addition, the diffusivity of the hydrogenation target substance or organic hydride will be reduced. Therefore, adjusting the thickness of the cathode catalyst layer 116 within the abovementioned range would be desirable.

The diffusion layer 120 has a function to evenly diffuse, in the cathode catalyst layer 116, the hydrogenation target substance in a liquid state supplied from the outside. A constituent material of the diffusion layer 120 may preferably have high compatibility with the hydrogenation target substance and organic hydride. The constituent material of the diffusion layer 120 may be a porous conductive base material or a fiber sintered body, for example. Porous conductive base materials and fiber sintered bodies are preferable because they have porosity suitable for supply and removal of gas and liquid and are capable of maintaining sufficient conductivity. The thickness of the diffusion layer 120 may preferably be 10-5000 µm.

More specific examples of the constituent material of the diffusion layer 120 include carbon woven fabric (carbon cloth), carbon non-woven fabric, and carbon paper. Carbon cloth is woven fabric made with bundles of hundreds of thin carbon fibers of which the diameter is a few micrometers. Also, carbon paper is obtained by making a thin film precursor from carbon material fiber using a papermaking method and then sintering the thin film precursor.

The microporous layer 118 has a function to promote diffusion of the hydrogenation target substance and organic hydride in liquid states in a surface direction of the cathode catalyst layer 116. The microporous layer 118 may be formed by applying to a surface of the diffusion layer 120, paste-like kneaded matter obtained by mixing and kneading conductive powder and a water repellent, and then drying the kneaded matter, for example. As the conductive powder, conductive carbon such as Vulcan (registered trademark) may be used, for example. As the water repellent, fluororesin such as polytetrafluoroethylene (PTFE) resin may be used, for example. The ratio between the conductive powder and water repellent may be appropriately determined within a range such that desired conductivity and water repellency can be obtained. As with the diffusion layer 120, the microporous layer 118 may also be formed of carbon cloth, carbon paper, or the like.

The thickness of the microporous layer 118 may preferably be 1-50 µm. When the microporous layer 118 is formed such as to be recessed inward from the surface of the diffusion layer 120, an average thickness of the microporous layer 118, including the recessed portion in the diffusion layer 120, is defined as the thickness of the microporous layer 118. A metal component may be coexistent on a surface of the microporous layer 118. This can improve the electron conductivity of the microporous layer 118 and make the current uniform.

The microporous layer 118 and the diffusion layer 120 are used in a state where pressure is applied thereto in the respective thickness directions. Accordingly, it will be unfavorable if such pressurization in the thickness directions during use changes the conductivity in the thickness directions. Therefore, the microporous layer 118 and the diffusion layer 120 may preferably be subjected to press working in advance. This can improve and stabilize the conductivity in a thickness direction in each layer. Further, improving the degree of bonding between the cathode catalyst layer 116 and the microporous layer 118 also contributes to improvement of the conductivity of the cathode 104. Such improvement of the degree of bonding also improves the capability of supplying a raw material and the capability of removing a product.

The cathode chamber 106 is a space for housing the cathode 104. The cathode chamber 106 is defined by the electrolyte membrane 102, the separator 114a, and a spacer 122 of a frame shape disposed between the electrolyte membrane 102 and the separator 114a. The cathode chamber 106 also houses a flow passage part 124, besides the cathode 104.

The flow passage part 124 is disposed adjacent to the diffusion layer 120. More specifically, the flow passage part 124 is provided to be in contact with a main surface of the diffusion layer 120 opposite to the microporous layer 118 side. Accordingly, the flow passage part 124 is disposed between the diffusion layer 120 and the separator 114a. The flow passage part 124 has a structure in which grooves 124b are provided on a main surface of a body part 124a of a plate shape. The grooves 124b constitute a flow passage for the hydrogenation target substance. The body part 124a is made of a conductive material. The flow passage part 124 also functions as a cathode support for positioning the cathode 104 within the cathode chamber 106. The flow passage part 124 receives pressing force from the anode support 110, which will be described later, and ensures electron conductivity between the separator 114a and the cathode 104.

The spacer 122 also serves as a seal material that prevents leakage of an organic substance including the hydrogenation target substance and a hydride to the outside of the cathode chamber 106, and the spacer 122 may preferably have electronic insulation properties. The constituent material of the spacer 122 may be polytetrafluoroethylene resin, for example. In the spacer 122, a cathode chamber inlet 126 and a cathode chamber outlet 128, which each communicate with the inside and the outside of the cathode chamber 106, are disposed.

The cathode chamber inlet 126 is disposed below the cathode chamber 106 in the vertical direction. One end of the cathode chamber inlet 126 is connected to the flow passage of the flow passage part 124, and the other end thereof is connected to a catholyte storage tank (not illustrated). Between the cathode chamber inlet 126 and the catholyte storage tank, a catholyte supply device (not illustrated) constituted by each of various pumps, such as a gear pump and a cylinder pump, a gravity flow type device, or the like is provided.

The catholyte storage tank stores a hydrogenation target substance to be hydrogenated by an electrochemical reduction reaction in the organic hydride production apparatus 100. The organic hydride used in the use according to the present embodiment is not particularly limited, as long as it is an organic compound that can be hydrogenated or dehydrogenated by a reversible hydrogenation or dehydrogenation reaction. Accordingly, acetone-isopropanol-based organic hydrides, benzoquinone-hydroquinone-based organic hydrides, aromatic hydrocarbon-based organic hydrides, and the likes may be widely used. Among them, aromatic hydrocarbon-based organic hydrides, represented by toluene-methylcyclohexane-based organic hydrides, may be preferable, in terms of transportability during the energy transportation, toxicity, safety, and storage stability, and also in terms of the transportable amount of hydrogen per volume or mass, ease of hydrogenation and dehydrogenation reactions, and energy conversion efficiency, including the feature by which the Gibbs free energy does not change significantly.

An aromatic hydrocarbon compound used as a hydrogenation target substance, i.e., a dehydrogenated product of an organic hydride, is a compound that contains at least one aromatic ring, such as benzene, an alkylbenzene, naphthalene, an alkyl naphthalene, anthracene, and diphenylethane. Alkylbenzenes include compounds in which each of one through four hydrogen atoms in an aromatic ring is replaced by a linear or branched alkyl group having one through six carbon atoms, such as toluene, xylene, mesitylene, ethylbenzene, and diethylbenzene. Alkylnaphthalenes include compounds in which each of one through four hydrogen atoms in an aromatic ring is replaced by a linear or branched alkyl group having one through six carbon atoms, such as methylnaphthalene. Each of the compounds may be used solely or in combination.

The hydrogenation target substance may preferably be at least one of toluene and benzene. As the hydrogenation target substance, a nitrogen-containing heterocyclic aromatic compound, such as pyridine, pyrimidine, pyrazine, quinoline, isoquinoline, an N-alkylpyrrole, an N-alkylindole, and N-alkyldibenzopyrrole, may also be used. The organic hydride is obtained by hydrogenating the hydrogenation target substance as set forth above and may be methylcyclohexane, dimethylcyclohexane, or piperidine, for example.

The hydrogenation target substance may preferably be liquid at ordinary temperatures. When a mixture of a plurality of aromatic hydrocarbon compounds as set forth above, a mixture of a plurality of nitrogen-containing heterocyclic aromatic compounds as set forth above, or a mixture of the both compounds is used, such a mixture may suitably be liquid. When the hydrogenation target substance is liquid at ordinary temperatures, such a hydrogenation target substance in the liquid state can be supplied to the organic hydride production apparatus 100, without performing a heating or pressurization process thereon. In the following, the liquid stored in the catholyte storage tank may be referred to as a "catholyte", as needed. The catholyte stored in the catholyte storage tank is supplied to the cathode chamber 106 by the catholyte supply device.

The catholyte supplied to the cathode chamber 106 is introduced into the cathode chamber 106 through the cathode chamber inlet 126. The catholyte introduced into the cathode chamber 106 is supplied to the cathode catalyst layer 116 via the grooves 124b of the flow passage part 124, the diffusion layer 120, and the microporous layer 118.

The cathode chamber outlet 128 is disposed above the cathode chamber 106 in the vertical direction. One end of the cathode chamber outlet 128 is connected to the flow passage of the flow passage part 124, and the other end thereof is connected to the catholyte storage tank, for example. The organic hydride, i.e., the hydrogenation target substance hydrogenated in the organic hydride production apparatus 100, and the unreacted hydrogenation target substance within the cathode chamber 106 are discharged outside the cathode chamber 106 through the cathode chamber outlet 128. Between the cathode chamber outlet 128 and the catholyte storage tank, a separation tank (not illustrated) is provided. In the separation tank, hydrogen gas as a by-product, an anolyte flowing into the cathode 104 side via the electrolyte membrane 102, or the like is separated from the mixture of the organic hydride and the hydrogenation target substance. The separated anolyte is reused. The organic hydride and the hydrogenation target substance are then returned into the catholyte storage tank.

The separator 114a is disposed on the cathode chamber 106 side. The separator 114a is laminated to a main surface of the flow passage part 124 opposite to the diffusion layer 120 side. The separator 114a has electron conductivity and also functions as a power feeding plate. The constituent material of the separator 114a may be a metal, such as SUS and Ti.

The anode 108 is provided opposite to the one side of the electrolyte membrane 102, i.e., opposite to the cathode 104. The anode 108 is provided to be in contact with the other main surface of the electrolyte membrane 102. The anode 108 contains an anode catalyst 108a used to oxidize water in the anolyte to produce protons. As the anode catalyst 108a, metal particles of a substance selected from a group including Ru, Rh, Pd, Ir, Pt, and an alloy containing at least one of them may be used. Also, since the anode catalyst 108a generates oxygen while being immersed in an acid electrolyte, a platinum metal oxide-based catalyst may be preferably used therefor. Particularly, iridium oxide-based catalysts have less voltage loss and excellent durability. Furthermore, an iridium oxide-based catalyst that forms, with tantalum oxide, a solid solution exhibits a smaller increase of voltage loss in a system into which an organic substance is mixed, so that such an iridium oxide-based catalyst may be preferable as the anode catalyst 108a.

The anode 108 includes, besides the anode catalyst 108a, a base material 108b for supporting the anode catalyst 108a. The base material 108b has electrical conductivity sufficient to conduct current required for electrolysis. Also, the base material 108b may preferably have excellent corrosion resistance to the anolyte. The base material 108b may be made of metal, such as Ti, Cr, Mn, Fe, Co, Ni, Cu, Zn, Zr, Nb, Mo, Ta, and W, or an alloy composed primarily of such metal. More preferably, the base material 108b may contain 20 parts by mass or more of at least one metal selected from a group including Ti, Zr, Nb, and Ta.

The thickness of the base material 108b may preferably be in the range from 0.05 mm to 1 mm inclusive. The thickness of the anode 108 is substantially identical with the thickness of the base material 108b. Also, a ratio T1/T2 of a thickness T1 of the electrolyte membrane 102 to a thickness T2 of the anode 108 is defined in claim 2 and is 0.35 or greater, more preferably be 0.6 or greater, and further preferably be 1 or greater. Setting the ratio T1/T2 to 0.35 or greater can restrain curving of the electrolyte membrane 102, thereby also restraining peeling off of the cathode 104 and the electrolyte membrane 102. Accordingly, the cell voltage required to drive the organic hydride production apparatus 100 can be reduced more certainly.

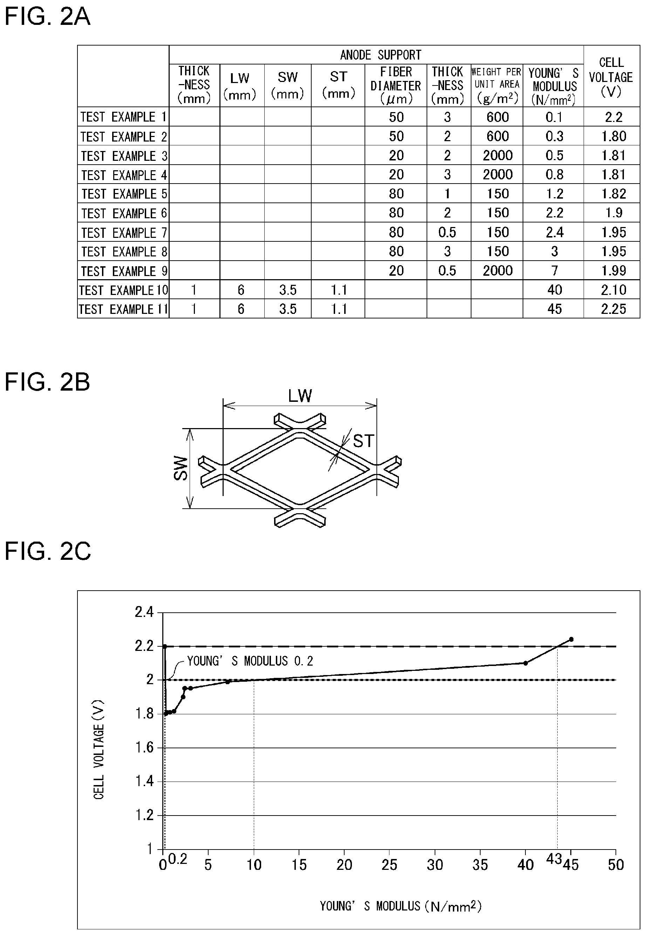

The anode 108 is a gas-evolving electrode. Accordingly, in order to promote the supply of the anolyte to the anode 108 without increase of resistance caused by bubbles, the base material 108b may preferably be a porous body. The base material 108b is a plate-like body of a mesh type as defined in claim 3. For example, the base material 108b is formed of an expanded mesh. The shape of the mesh of the base material 108b is a rhombic shape, and an average value of the short way of mesh SW (see FIG. 2B) and the long way of mesh LW (see FIG. 2B) of the rhombic shape is in the range from 0.3 mm to 3 mm inclusive as feined in claim 3. Preferably it may be greater than 0.3 mm and equal to or less than 3 mm, and further preferably be in the range from 1.0 mm to 1.5 mm inclusive. A long way direction is a direction of a slit in the manufacture of the expanded mesh, and a short way direction is a direction perpendicular to the slit. The expanded mesh may desirably be subjected to a smoothing process after the mesh work.

By setting the average value of SW and LW to 3 mm or less, the pressure applied by the anode support 110 to the anode 108 when the organic hydride production apparatus 100 is fitted can be provided to the electrolyte membrane 102 side more evenly. Also, the curving of the electrolyte membrane 102 can be restrained more certainly. Accordingly, the cell voltage required to drive the organic hydride production apparatus 100 can be reduced more certainly. Also, setting the average value of SW and LW to 0.3 mm or greater can further restrain inhibition of infiltration of the anolyte into the anode 108, caused by oxygen generated at the anode 108. Accordingly, increase in cell voltage can be restrained more certainly.

The aperture rate of the base material 108b may be defined by the opening area per projected area of the base material 108b and may be in the range from 40% to 90% inclusive, for example. By setting the aperture rate to 40% or greater, oxygen bubbles generated at the anode 108 can be removed more rapidly. Accordingly, increase in cell resistance (in other words, increase in cell voltage) due to so-called bubble effect can be restrained. Also, setting the aperture rate to 90% or less can prevent excessive decrease of active electrode area.

The size of the apertures in the base material 108b or the pitch between the apertures may preferably be the thickness of the electrolyte membrane 102 or less. Accordingly, a situation can be prevented in which the electrolyte membrane 102 is distorted and then stuck into an aperture of the anode 108. As a result, contact between the electrolyte membrane 102 and the cathode 104 can be maintained, so that increase in cell voltage can be restrained.

Besides the expanded mesh, other planar members having apertures may be appropriately selected for the base material 108b. For example, part of a metal plate may be punched or smelted, and the resulting plate provided with round or square apertures can be used. When a round-hole punched plate is used for the base material 108b, the base material 108b of one embodiment may have a thickness of 0.5 mm or less, a hole diameter in the range from 0.1 mm to 0.3 mm inclusive, and a hole pitch in the range from 0.2 mm to 5 mm inclusive.

Alternatively, the base material 108b may be formed of a fabric mesh made of metal fiber. In this case, the fiber diameter of the metal fiber may be 0.2 mm or less, and the mesh pitch may be 0.5 mm or less, for example. Further, the base material 108b may be formed of a sintered metal porous body, a foam molded body, or a powder molded body, for example. The metal porous body may be continuous fiber or chatter fiber containing micropores, for example. When the base material 108b is formed of a fabric mesh, a sintered body, or the like, the porosity of the base material 108b may be in the range from 40% to 90% inclusive, for example. The "porosity" in the present specification means proportion of the volume of the pores to the total volume, i.e., volume porosity. The volume porosity can be calculated based on a cross-sectional image obtained using a scanning electron microscope, a metallographic microscope, or the like.

On a surface of the base material 108b, a conductive film made of a valve metal, such as tantalum, an alloy containing a valve metal, a noble metal, or a noble metal oxide may be provided, for example. This can restrain the formation of an insulating oxide film on a surface of the base material 108b, caused by contact between the anode 108 and the anolyte. Therefore, the conductivity between the anode catalyst 108a and the base material 108b can be favorably maintained.

The anode 108 may preferably have larger Young's modulus than the anode support 110. More preferably, the Young's modulus of the anode 108 may be in the range from 2 N/mm² to 40 N/mm² inclusive.

The anode support 110 is provided opposite to the electrolyte membrane 102 side of the anode 108 and supports the anode 108. In present embodiment, the anode support 110 is provided to be in contact with a main surface of the anode 108 opposite to the electrolyte membrane 102 side. The anode 108 is pressed onto the electrolyte membrane 102 by the anode support 110. The anode support 110 is formed of an elastic porous body of a plate shape. Since the anode support 110 is a porous body, the anolyte can be supplied to the anode 108.

The anode support 110 may preferably be made of a material having excellent corrosion resistance to the anolyte, such as Ti, Zr, Nb, and Ta, or an alloy composed primarily of such metal. More preferably, the anode support 110 may contain 20 parts by mass or more of at least one metal selected from a group including Ti, Zr, Nb, and Ta. On a surface of the anode support 110, anti-corrosion treatment against the anolyte may be performed, similarly to the base material 108b.

The anode support 110 has electron conductivity and also functions as a current collector plate. The thickness of the anode support 110 may be in the range from 0.5 mm to 5 mm inclusive, for example. Also, the porosity of the anode support 110 may be in the range from 40% to 95% inclusive, for example.

The Young's modulus of the anode support 110 is defined in claim 1. It is greater than 0.1 N/mm² and less than 43 N/mm². The lower limit of the Young's modulus of the anode support 110 may preferably be 0.2 N/mm² or greater, and more preferably be 0.3 N/mm² or greater. The upper limit of the Young's modulus of the anode support 110 may preferably be 40 N/mm² or less, more preferably be 10 N/mm² or less, and further preferably be 7 N/mm² or less. The Young's modulus can be calculated by the following method. First, a support specimen cut out in an appropriate area is sandwiched between two hard metal plates to form a laminated body. To the laminated body, a load is applied using a load cell. The initial thickness and the thickness during the load application of the support specimen are measured using a micrometer. Thereafter, the magnitude of the applied load is divided by the area of the support specimen, and the obtained value is further divided by the variation of the thickness, thereby obtaining the Young's modulus.

By setting the Young's modulus of the anode support 110 to greater than 0.1 N/mm², the anode 108 can be pressed more certainly. This can restrain peeling off of the cathode 104 and the electrolyte membrane 102, thereby reducing the cell voltage in the organic hydride production apparatus 100. When the Young's modulus is 0.1 N/mm² or less, the thickness of the anode support needs to be remarkably increased in order to press the anode 108 at desired pressure, which is not preferable.

Also, by setting the Young's modulus of the anode support 110 to less than 43 N/mm², a situation can be prevented in which the elasticity of the anode support 110 is excessively reduced and pressure is unevenly applied to the anode 108. This can restrain the occurrence of partial contact failure between the anode 108 and the electrolyte membrane 102 or the anode support 110, thereby reducing the cell voltage in the organic hydride production apparatus 100. Also, a situation can be avoided in which the deformation amount of the anode support 110 is excessively reduced and the assembly of the organic hydride production apparatus 100 becomes difficult.

The constituent material of the anode support 110 may be a sintered body of continuous fiber or chatter fiber containing micropores, a foam molded body, or a powder molded body, for example. The fiber included as the constituent material of the anode support 110 may preferably have a fiber diameter in the range from 10 µm to 100 µm inclusive, and a length in the range from 1 mm to 100 mm inclusive. The weight per unit area of the fiber used to form the anode support 110 may be in the range from 100 g/m² to 5000 g/m² inclusive, for example. Even with the same dimensions and weight per unit area of the fiber, the resistance value and the Young's modulus of the anode support 110 can be adjusted by adjusting the temperature and the time of the heat treatment. A laminated web obtained by sintering fiber may have an elastic deformation amount in the range from 0.2 mm to 2 mm inclusive at a pressure of 0.1 MP, for example. The deformation rate may be in the range from 20% to 80% inclusive, for example. The anode support 110 may also be formed of a planar member having multiple apertures, such as an expanded mesh. In other words, the "porous body" in the subject application includes a planar member provided with multiple apertures.

The anode chamber 112 is a space for housing the anode 108 and the anode support 110. The anode chamber 112 is defined by the electrolyte membrane 102, the separator 114b, and a spacer 130 of a frame shape disposed between the electrolyte membrane 102 and the separator 114b.

The spacer 130 also serves as a seal material that prevents leakage of the anolyte to the outside of the anode chamber 112, and the spacer 130 may preferably have electronic insulation properties. The constituent material of the spacer 130 may be polytetrafluoroethylene resin, for example. In the spacer 130, an anode chamber inlet 132 and an anode chamber outlet 134, which each communicate with the inside and the outside of the anode chamber 112, are disposed.

The anode chamber inlet 132 is disposed below the anode chamber 112 in the vertical direction. One end of the anode chamber inlet 132 is connected to the anode support 110, and the other end thereof is connected to an anolyte storage tank (not illustrated). Between the anode chamber inlet 132 and the anolyte storage tank, an anolyte supply device (not illustrated) constituted by each of various pumps, such as a gear pump and a cylinder pump, a gravity flow type device, or the like is provided.

The anolyte storage tank stores the anolyte. The anolyte is an aqueous solution as defined in claim 4 or is a sulfuric acid aqueous solution, nitric acid aqueous solution, or hydrochloric acid aqueous solution having the ion conductivity of 0.01 S/cm or greater measured at 20 degrees C as defined in claim 5. By setting the ion conductivity of the anolyte to 0.01 S/cm or greater, industrially sufficient electrochemical reactions can be induced. The anolyte stored in the anolyte storage tank is supplied to the anode chamber 112 by the anolyte supply device. Pure water may also be used as the anolyte. In this case, it may be preferable to fix the anode catalyst 108a to the base material 108b using a perfluorosulfonic acid polymer or the like such as to restrain coming off of the anode catalyst 108a due to bubble generation.

The anolyte supplied to the anode chamber 112 is introduced into the anode chamber 112 through the anode chamber inlet 132. The anolyte introduced into the anode chamber 112 is supplied to the anode 108 via the anode support 110.

The anode chamber outlet 134 is disposed above the anode chamber 112 in the vertical direction. One end of the anode chamber outlet 134 is connected to the anode support 110, and the other end thereof is connected to the anolyte storage tank, for example. The anolyte within the anode chamber 112 is discharged outside the anode chamber 112 through the anode chamber outlet 134. Between the anode chamber outlet 134 and the anolyte storage tank, a gas-liquid separation unit (not illustrated) is provided. In the gas-liquid separation unit, oxygen produced by electrolysis of the anolyte, and gases, such as the gasified hydrogenation target substance and organic hydride, mixed into the anolyte via the electrolyte membrane 102 are separated from the anolyte. The unreacted anolyte is returned into the anolyte storage tank.

The separator 114b is disposed on the anode chamber 112 side. The separator 114b is laminated to a main surface of the anode support 110 opposite to the anode 108 side. The separator 114b has electron conductivity and also functions as a power feeding plate. The constituent material of the separator 114b may be a metal, such as SUS and Ti.

The organic hydride production apparatus 100 may be assembled in the following way. First, the flow passage part 124, the cathode 104, the electrolyte membrane 102, the anode 108, and the anode support 110 are laminated in this order to obtain a laminated body. Thereafter, the spacers 122 and 130 are fitted to the laminated body, which is then sandwiched between the pair of separators 114a and 114b. The pair of separators 114a and 114b apply appropriate clamping pressure to the laminated body.

For example, to the laminated body, pressure of 98.0665 kPa (~ 1 kgf/cm²) or less is applied. Since the organic hydride production apparatus 100 includes the anode support 110, the electrical connecting condition in each layer can be favorably maintained with the small pressure of 98.0665 kPa (~ 1 kgf/cm²) or less. Accordingly, weight saving and cost reduction of the organic hydride production apparatus 100 can be achieved. Also, even when pressure fluctuation is caused during the operation of the organic hydride production apparatus 100, the anode support 110 is elastically deformed, so that a certain pressure can be always applied to each layer. When the laminated body is prepared, the anode 108 and the anode support 110 bonded in advance may be used. Alternatively, the anode support 110 and the separator 114b bonded in advance may be used. The organic hydride production apparatus 100 may be a bipolar electrolytic cell.

To the organic hydride production apparatus 100, an electric power controller and a drive controller, which are not illustrated, may be connected. The electric power controller may be a DC/DC converter for converting an output voltage of an electric power source into a predetermined voltage, for example. The positive output terminal of the electric power controller is connected to the anode 108. The negative output terminal of the electric power controller is connected to the cathode 104. Accordingly, a predetermined voltage is applied between the anode 108 and the cathode 104.

In the electric power controller, a reference terminal may be provided in order to detect the potentials of the positive and negative electrodes. In this case, the input side of the reference terminal is connected to a reference electrode (not illustrated) provided in the electrolyte membrane 102. The reference electrode is electrically isolated from the cathode 104 and the anode 108. The reference electrode is maintained at a reference electrode potential. The reference electrode potential may be a potential with respect to a reversible hydrogen electrode (RHE), for example. The reference electrode potential may also be a potential with respect to an Ag/AgCl electrode. The current flowing between the cathode 104 and the anode 108 is detected by a current detector (not illustrated). The current value detected by the current detector is input to the drive controller and used for control of the electric power controller by the drive controller. The potential difference between the reference electrode and the cathode 104 is detected by a voltage detector (not illustrated). The potential difference value detected by the voltage detector is input to the drive controller and used for control of the electric power controller by the drive controller.

The drive controller controls outputs at the positive output terminal and the negative output terminal of the electric power controller such that the potentials of the anode 108 and the cathode 104 become desired potentials. The electric power source may preferably be renewable energy obtained by solar power generation, wind power generation, hydropower generation, geothermal power generation, and the like, but is not particularly limited thereto.

In the organic hydride production apparatus 100 having the structure set forth above, reactions that occur when toluene (TL) is used as the hydrogenation target substance are as follows. When toluene is used as the hydrogenation target substance, the organic hydride to be obtained is methylcyclohexane (MCH).

### <Electrode reaction at the anode>

2H₂O → O₂ + 4H⁺ + 4e⁻

### <Electrode reaction at the cathode>

TL + 6H⁺ + 6e⁻ → MCH

### <Total reaction>

2TL + 6H₂O → 2MCH + 3O₂

Thus, the electrode reaction at the anode 108 and the electrode reaction at the cathode 104 proceed in parallel. Protons (H⁺) produced by electrolysis of water at the anode 108 are supplied to the cathode 104 via the electrolyte membrane 102. The protons supplied to the cathode 104 are used for hydrogenation of the hydrogenation target substance at the cathode 104. Accordingly, toluene is hydrogenated, so that methylcyclohexane is produced. Therefore, with the use of the organic hydride production apparatus 100 as outlined in the claims, the electrolysis of water and the hydrogenation of the hydrogenation target substance can be performed in one step.

As described above, the organic hydride production apparatus 100 includes the electrolyte membrane 102, the cathode 104, the anode 108, and the anode support 110 provided opposite to the electrolyte membrane 102 side of the anode 108. The anode support 110 is formed of an elastic porous body of a plate shape of which the Young's modulus is greater than 0.1 N/mm² and less than 43 N/mm². By providing such an elastic and porous anode support 110 of a plate shape, the electrical connecting condition in each member constituting the organic hydride production apparatus 100 can be favorably maintained.

Maintaining the contact between the electrolyte membrane 102 and the cathode 104 is particularly important. Catholytes made of organic compounds, such as toluene, are less conductive. Accordingly, if the electrolyte membrane 102 and the cathode 104 are peeled off from each other, supply of protons from the electrolyte membrane 102 to the cathode 104 in the peeled part will be inhibited. If the supply of protons is inhibited, the cathode catalyst may be deactivated.

However, by providing the anode support 110, the contact between the electrolyte membrane 102 and the cathode 104 can be maintained more certainly. Accordingly, the cell voltage in the organic hydride production apparatus 100 can be reduced. Therefore, the efficiency of organic hydride production can be improved. Further, the life of the organic hydride production apparatus 100 can be prolonged.

The Young's modulus of the anode support 110 may more preferably be set in the range from 0.2 N/mm² to 10 N/mm² inclusive. Accordingly, the cell voltage in the organic hydride production apparatus 100 can be further reduced. Also, the ratio T1/T2 of the thickness T1 of the electrolyte membrane 102 to the thickness T2 of the anode 108 is 0.35 or greater. Accordingly, the cell voltage in the organic hydride production apparatus 100 can be reduced more certainly. The base material 108b included in the anode 108 is a mesh type material. The shape of the mesh is a rhombic shape, and an average value of the short way of mesh SW and the long way of mesh LW of the rhombic shape is in the range from 0.3 mm to 3 mm inclusive. Accordingly, the cell voltage in the organic hydride production apparatus 100 can be reduced more certainly.

The present invention is not limited to the embodiment stated above. It is to be understood that various changes and modifications, including design modifications, may be made based on the knowledge of those skilled in the art and that embodiments with such changes and modifications added are also within the scope of the present invention.

### [Examples]

Examples of the present invention will now be described by way of example only to suitably describe the present invention and should not be construed as limiting the scope of the invention.

### [Evaluation of Relationships between Young's Modulus of Anode Support and Cell Voltage]

FIG. 2A shows an anode support and a cell voltage in an organic hydride production apparatus according to each of Test Examples 1-11. FIG. 2B is a diagram used to describe long way of mesh LW, short way of mesh SW, and a strand width ST. FIG. 2C shows relationships between the Young's modulus of the anode support and the cell voltage.

### (Test Example 1)

The anode was prepared according to the following procedure. First, as the base material of the anode, an expanded mesh having a predetermined mesh shape was prepared. Dry blasting was performed on the surfaces of the base material, and a cleaning process in a 20 percent sulfuric acid aqueous solution was performed. Thereafter, the base material was set in an arc ion plating apparatus using a Ti-Ta alloy target. Accordingly, Ti-Ta alloy coating was formed on the surfaces of the base material, at the base material temperature of 150 degrees C and the vacuum of 1.0×10⁻² Torr. The thickness of the coating was set to 2 µm. Thereafter, to the base material subjected to the coating process, a mixed aqueous solution of iridium tetrachloride and tantalum pentoxide was applied, and heat treatment was performed thereon at 550 degrees C in an electric furnace. By repeating this operation multiple times, the anode containing equimolar amounts of iridium oxide and tantalum oxide was obtained. The amount of the catalyst in the anode was set to 12 g/m² in terms of the amount of Ir metal per electrode area. The Young's modulus of the anode was set to 40 N/mm².

Also, as shown in FIG. 2A, titanium fiber having a fiber diameter of 50 µm was placed in the furnace such that the weight per unit area of the fiber became 600 g/m². The titanium fiber was then sintered with an appropriate load applied thereto under an inert atmosphere while the temperature in the furnace was set to 900 degrees C and the heating time was set to 30 minutes. Thus, the anode support formed of a sintered body of metal fiber was obtained. The thickness of the anode support was set to 3 mm. Also, the Young's modulus of the anode support was set to 0.1 N/mm².

Also, a laminated body of the cathode and the electrolyte membrane was formed according to the following procedure. First, catalyst ink for the cathode catalyst layer was prepared by adding 5 percent Nafion (registered trademark) Dispersion Solution (made by E. I. du Pont de Nemours and Company) to powder of PtRu/C catalyst TEC61E54 (made by TANAKA KIKINZOKU KOGYO K.K.) and by using a solvent as appropriate. The ratio of Nafion to carbon of the catalyst ink was set to 0.8. The catalyst ink was further prepared such that the noble metal amount (the amount of Pt and Ru) therein became 0.5 mg/cm², and then applied to carbon paper GDL10BC (made by SGL Carbon) using a bar coater. Thereafter, the carbon paper was heated at 80 degrees C to dry the solvent component in the catalyst ink, so that the cathode catalyst layer was obtained.

Further, the diffusion layer was prepared by allowing carbon paper to support Pt particles. The Pt particles included in the diffusion layer function to promote the chemical reaction between hydrogen gas as a by-product and the unreacted hydrogenation target substance at the cathode. First, H₂PtCl₆·6H₂O and 1-propanol was mixed together to prepare a mixed solution. The amount of H₂PtCl₆·6H₂O added was adjusted such that the amount of Pt supported by the carbon paper became 0.02 mg/cm². In the mixed solution thus obtained, carbon paper GDL10BC (made by SGL Carbon) was immersed.

Thereafter, the carbon paper was completely dried under a N₂ gas atmosphere at 60 degrees C. Subsequently, the carbon paper was immersed in a 1-mg NaBH₄ aqueous solution, and reduction treatment was performed for two hours. After the reduction treatment, the carbon paper was immersed in pure water to be cleaned. Thereafter, the carbon paper was dried and obtained as the diffusion layer. Also, as the electrolyte membrane, Nafion (registered trademark) 117 (made by E. I. du Pont de Nemours and Company) was prepared. The thickness of the electrolyte membrane was set to 0.175 mm. To the electrolyte membrane, the cathode catalyst layer and the diffusion layer were laminated, and hot pressing is performed thereon for three minutes at 120 degrees C and 1 MPa. Thus, a laminated body of the cathode and the electrolyte membrane was obtained.

Also, a complex of a cathode-side separator and a flow passage part, an anode-side separator, and a cathode spacer and an anode spacer were prepared. The complex and the anode-side separator used are made of titanium. The complex, the cathode spacer, the laminated body of the cathode and the electrolyte membrane, the anode, the anode support, the anode spacer, and the anode-side separator were laminated in this order. The resulting laminated body was then fitted, with pressure applied thereto from the outside. Pressing each layer using elastic force of the anode support could create a state in which the layers are in close contact with each other. Through the processes set forth above, the organic hydride production apparatus of Test Example 1 was obtained. The active electrode area of the organic hydride production apparatus was set to 100 cm².

To the cathode chamber inlet in the cathode spacer, a supply passage for the hydrogenation target substance was connected. To the cathode chamber outlet in the cathode spacer, a discharge passage for the organic hydride was connected. Also, to the anode chamber inlet in the anode spacer, a supply passage for the anolyte was connected. To the anode chamber outlet in the anode spacer, a discharge passage for the anolyte was connected.

In this organic hydride production apparatus, toluene as the catholyte was made to flow through the cathode chamber. Also, 100 g/L sulfuric acid aqueous solution as the anolyte was made to flow through the anode chamber. The flow rate of the catholyte was set to 10 mL/minute. The flow rate of the anolyte was also set to 10 mL/minute. At the temperature of 60 degrees C and the current density of 0.4 A/cm², the electrolytic reaction was caused. The anolyte was supplied from the anolyte storage tank to the anode chamber using a pump, and then returned from the anode chamber to the anolyte storage tank to be circulated (batch operation). The anolyte was supplied through a lower part of the organic hydride production apparatus to the anode chamber. Also, the anolyte was circulated while an amount of water reduced by electrolysis was supplemented.

The negative electrode and the positive electrode of a constant-current power supply were connected respectively to the cathode and the anode. The output current of the constant-current power supply was set to 40 A (0.4 A/cm²) and applied to the organic hydride production apparatus. The cell voltage in the organic hydride production apparatus was measured. FIG. 2A shows the result.

### (Test Examples 2-9)

The organic hydride production apparatus of each of Test Examples 2-9 was prepared, in which the fiber diameter and the weight per unit area of the fiber constituting the anode support, and the thickness and the Young's modulus of the anode support were adjusted, as shown in FIG. 2A, and the other procedures were performed according to Test Example 1. The cell voltage in each organic hydride production apparatus was measured. FIG. 2A shows the results.

### (Test Examples 10 and 11)

The organic hydride production apparatus of each of Test Examples 10 and 11 was prepared, in which an anode support formed of an expanded mesh, instead of a sintered body of metal fiber, was used, as shown in FIG. 2A, and the other procedures were performed according to Test Example 1. The cell voltage in each organic hydride production apparatus was measured. FIG. 2A shows the results. The long way of mesh LW, the short way of mesh SW, and the strand width ST of the expanded mesh are as illustrated in FIG. 2B and are matters well known to persons skilled in the art.

FIG. 2C shows relationships between the Young's modulus of the anode support and the cell voltage in the organic hydride production apparatus according to each Test Example. As shown in FIG. 2C, it is ascertained that, when the Young's modulus of the anode support is greater than 0.1 N/mm² and less than 43 N/mm², the cell voltage falls below 2.2 V. The cell voltage of 2.2 V corresponds to a cell voltage in a conventionally well-known organic hydride production apparatus that does not include the anode support of the subject application. Accordingly, it is ascertained that, when the Young's modulus of the anode support is greater than 0.1 N/mm² and less than 43 N/mm², the efficiency of organic hydride production can be improved. It is also ascertained that, when the Young's modulus of the anode support is in the range from 0.2 N/mm² to 10 N/mm² inclusive, the cell voltage is 2.0 V or less. The cell voltage of 2.0 V corresponds to a cell voltage in alkaline water electrolysis. Accordingly, it is ascertained that, when the Young's modulus of the anode support is in the range from 0.2 N/mm² to 10 N/mm² inclusive, the efficiency of organic hydride production can be improved to be comparable to or greater than the efficiency of hydrogen production in alkaline water electrolysis. Further, it is ascertained that, when the Young's modulus of the anode support is in the range from 0.3 N/mm² to 1.2 N/mm² inclusive, the efficiency of organic hydride production can be further improved.

### [Evaluation of Relationships between Thickness Ratio of Electrolyte Membrane and Anode, and Cell Voltage]

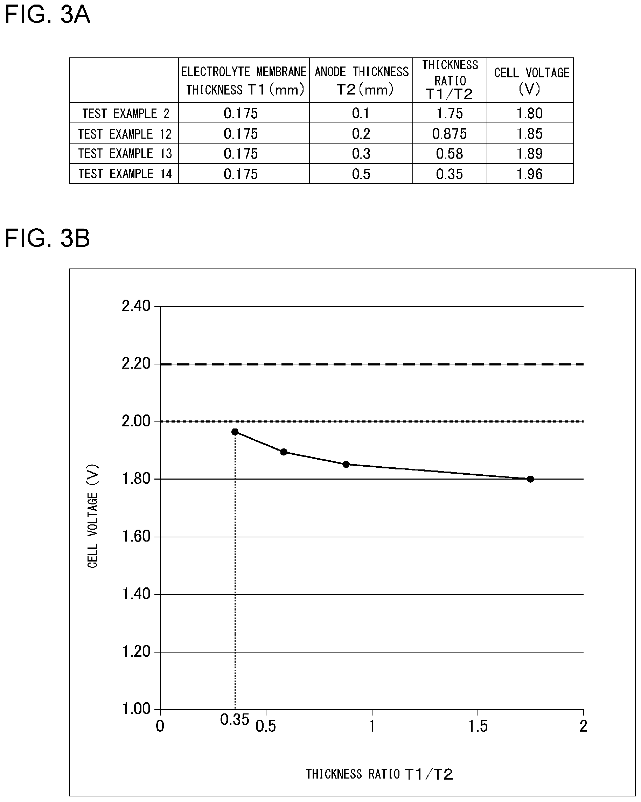

FIG. 3A shows thicknesses of the electrolyte membrane and the anode included in the organic hydride production apparatus according to each of Test Examples 2 and 12-14, the ratio of the thicknesses, and the cell voltage. FIG. 3B shows relationships between the ratio of the thicknesses and the cell voltage.

### (Test Examples 2 and 12-14)

The organic hydride production apparatus of each of Test Examples 2 and 12-14 was prepared, in which the thickness T1 of the electrolyte membrane was fixed while the thickness T2 of the anode was adjusted to vary the thickness ratio T1/T2, as shown in FIG. 3A, and the other procedures were performed according to Test Example 1. The Young's modulus of the anode support was set to 0.3 N/mm² in all the Test Examples. The cell voltage in each organic hydride production apparatus was measured. FIG. 3A shows the results.

FIG. 3B shows relationships between the ratio T1/T2 of the thickness T1 of the electrolyte membrane to the thickness T2 of the anode, and the cell voltage in the organic hydride production apparatus according to each Test Example. As shown in FIG. 3B, when the thickness ratio T1/T2 is 0.35 or greater, the cell voltage is less than 2.0 V. Accordingly, it is ascertained that, when the thickness ratio T1/T2 is set to 0.35 or greater, the efficiency of organic hydride production can be improved more certainly to be greater than the efficiency of hydrogen production in alkaline water electrolysis.

### [Evaluation of Relationships between Aperture Dimensions of Anode and Cell Voltage]

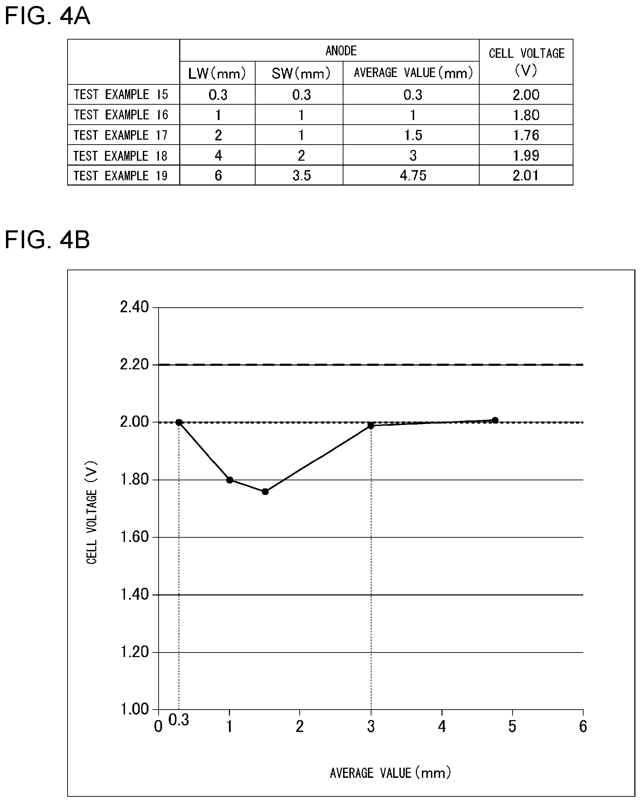

FIG. 4A shows mesh dimensions of the anode and the cell voltage in the organic hydride production apparatus according to each of Test Examples 15-19. FIG. 4B shows relationships between an average value of the long way of mesh LW and the short way of mesh SW, and the cell voltage.

### (Test Examples 15-19)

The organic hydride production apparatus of each of Test Examples 15-19 was prepared, in which the long way of mesh LW and the short way of mesh SW of the mesh in the anode base material was varied, as shown in FIG. 4A, and the other procedures were performed according to Test Example 1. The Young's modulus of the anode support was set to 0.3 N/mm² in all the Test Examples. The cell voltage in each organic hydride production apparatus was measured. FIG. 4A shows the results.

FIG. 4B shows relationships between the average value of the long way of mesh LW and the short way of mesh SW, and the cell voltage in the organic hydride production apparatus according to each Test Example. As shown in FIG. 4B, when the average value is in the range from 0.3 mm to 3 mm inclusive, the cell voltage is 2.0 V or less. Accordingly, it is ascertained that, when the average value is set in the range from 0.3 mm to 3 mm inclusive, the efficiency of organic hydride production can be improved more certainly to be equal to or greater than the efficiency of hydrogen production in alkaline water electrolysis. Also, when the average value is greater than 0.3 mm and equal to or less than 3 mm, the cell voltage is less than 2.0 V. Accordingly, it is ascertained that, when the average value is set to be greater than 0.3 mm and equal to or less than 3 mm, the efficiency of organic hydride production can be improved more certainly to be greater than the efficiency of hydrogen production in alkaline water electrolysis.

### [REFERENCE SIGNS LIST]

- 100: organic hydride production apparatus
- 102: electrolyte membrane
- 104: cathode
- 108: anode
- 108a: anode catalyst
- 108b: base material
- 110: anode support

### [INDUSTRIAL APPLICABILITY]

The present invention is applicable to an organic hydride production apparatus.

## Claims

1. Use of an organic hydride production apparatus (100) for producing an organic hydride, the apparatus comprising:
an electrolyte membrane (102) having proton conductivity;
a cathode (104), provided on one side of the electrolyte membrane (102), that contains a cathode catalyst used to hydrogenate a hydrogenation target substance using protons to produce an organic hydride;
an anode (108), provided opposite to the one side of the electrolyte membrane (102), that contains an anode catalyst (108a) used to oxidize water to produce protons; and
an anode support (110), provided opposite to the electrolyte membrane (102) side of the anode (108), that supports the anode (108), **characterized in that**
the anode support (110) is formed of an elastic porous body of which the Young's modulus is 0.2 N/mm² or greater and 10 N/mm² or less,
wherein the elastic porous body is a sintered body of titanium fiber,
wherein the electrolyte membrane (102), the cathode (104), the anode (108), the anode support (110) and a flow passage part (124) are laminated to form a laminated body, the laminated body being fitted with spacers (122, 130) and wherein the use comprises the step of applying a clamping pressure of 98.0665 kPa (1 kgf/cm2) or less to the laminated body using a pair of separators (114a, 114b).

2. The use of claim 1, wherein a ratio T1/T2 of a thickness T1 of the electrolyte membrane (102) to a thickness T2 of the anode (108) is 0.35 or greater.

3. The use of claim 1 or 2, wherein:
the anode (108) comprises the anode catalyst (108a), and a base material (108b) of a mesh type that supports the anode catalyst (108a); and
the shape of the mesh in the base material (108b) is a rhombic shape, and an average value of short way of mesh SW and long way of mesh LW of the rhombic shape is in the range from 0.3 mm to 3 mm inclusive.

4. The use of any of claims 1 to 3, wherein an anolyte comprising an aqueous solution is used.

5. The use of claim 4, wherein the aqueous solution is a sulfuric acid aqueous solution, a nitric acid aqueous solution, or a hydrochloric acid aqueous solution having an ion conductivity of 0.01 S/cm or greater measured at 20 degrees C.

## Patentansprüche

1. Verwendung einer Organisches-Hydrid-Herstellungsvorrichtung (100) zur Herstellung eines organischen Hydrids, wobei die Vorrichtung umfasst:
eine Elektrolytmembran (102) mit Protonenleitfähigkeit;
eine Kathode (104), bereitgestellt an einer Seite der Elektrolytmembran (102), die einen Kathodenkatalysator enthält, der zur Hydrierung eines Hydrierungs-Zielstoffs unter Verwendung von Protonen zur Herstellung eines organischen Hydrids verwendet wird;
eine Anode (108), bereitgestellt gegenüber der einen Seite der Elektrolytmembran (102), die einen Anodenkatalysator (108a) enthält, der verwendet wird, um Wasser zu oxidieren, um Protonen zu erzeugen; und
einen Anodenträger (110), bereitgestellt gegenüber der Elektrolytmembran (102)-Seite der Anode (108), der die Anode (108) trägt, **dadurch gekennzeichnet, dass**
der Anodenträger (110) aus einem elastischen porösen Körper gebildet ist, dessen Elastizitätsmodul 0,2 N/mm² oder mehr und 10 N/mm² oder weniger beträgt,
wobei der elastische poröse Körper ein Sinterkörper aus Titanfaser ist,
wobei die Elektrolytmembran (102), die Kathode (104), die Anode (108), der Anodenträger (110) und ein Strömungsdurchgangsteil (124) laminiert sind, um einen laminierten Körper zu bilden, wobei der laminierte Körper mit Abstandshaltern (122, 130) ausgestattet ist, und wobei die Verwendung den Schritt des Anlegens eines Klemmdrucks von 98,0665 kPa (1 kgf/cm2) oder weniger an den laminierten Körper unter Verwendung eines Paars von Separatoren (114a, 114b) umfasst.

2. Verwendung nach Anspruch 1, wobei ein Verhältnis T1/T2 einer Dicke T1 der Elektrolytmembran (102) zu einer Dicke T2 der Anode (108) 0,35 oder mehr beträgt.

3. Verwendung nach Anspruch 1 oder 2, wobei:
die Anode (108) den Anodenkatalysator (108a) und ein Basismaterial (108b) vom Maschentyp umfasst, das den Anodenkatalysator (108a) trägt; und
die Form des Maschenmaterials in dem Basismaterial (108b) eine Rautenform ist, und ein Mittelwert der kurzen Strecke des Maschenmaterials SW und der langen Strecke des Maschenmaterials LW der Rautenform im Bereich von 0,3 mm bis 3 mm einschließlich liegt.

4. Verwendung nach einem der Ansprüche 1 bis 3, wobei ein Anolyt, der eine wässrige Lösung umfasst, verwendet wird.

5. Verwendung nach Anspruch 4, wobei die wässrige Lösung eine wässrige Schwefelsäurelösung, eine wässrige Salpetersäurelösung oder eine wässrige Salzsäurelösung mit einer Ionenleitfähigkeit von 0,01 S/cm oder mehr, gemessen bei 20 °C, ist.

## Revendications

1. Utilisation d'un appareil de production d'hydrure organique (100) pour produire un hydrure organique, l'appareil comprenant :
une membrane électrolytique (102) ayant une conductivité protonique ;
une cathode (104), prévue sur un premier côté de la membrane électrolytique (102), qui contient un catalyseur de cathode utilisé pour hydrogéner une substance cible d'hydrogénation en utilisant des protons afin de produire un hydrure organique ;
une anode (108), prévue à l'opposé du premier côté de la membrane électrolytique (102), qui contient un catalyseur d'anode (108a) utilisé pour oxyder l'eau afin de produire des protons ; et
un support d'anode (110), prévu à l'opposé du côté de la membrane électrolytique (102) de l'anode (108), qui supporte l'anode (108), **caractérisée en ce que**
le support d'anode (110) est formé d'un corps poreux élastique dont le module de Young est supérieur ou égal à 0,2 N/mm² et inférieur ou égal à 10 N/mm²,
dans laquelle le corps poreux élastique est un corps fritté en fibre de titane,
dans laquelle la membrane électrolytique (102), la cathode (104), l'anode (108), le support d'anode (110) et une partie de passage d'écoulement (124) sont stratifiés pour former un corps stratifié, le corps stratifié étant équipé d'entretoises (122, 130) et dans laquelle l'utilisation comprend l'étape d'application d'une pression de serrage inférieure ou égale à 98,0665 kPa (1 kgf/cm²) au corps stratifié en utilisant une paire de séparateurs (114a, 114b).

2. Utilisation de la revendication 1, dans laquelle le rapport T1/T2 de l'épaisseur T1 de la membrane électrolytique (102) sur l'épaisseur T2 de l'anode (108) est supérieur ou égal à 0,35.

3. Utilisation de la revendication 1 ou 2, dans laquelle :
l'anode (108) comprend le catalyseur d'anode (108a) et un matériau de base (108b) de type maille qui supporte le catalyseur d'anode (108a) ; et
la forme de la maille dans le matériau de base (108b) est une forme rhombique, et la valeur moyenne du court chemin de la maille SW et du long chemin de la maille LW de la forme rhombique se trouve dans la plage allant de 0,3 mm à 3 mm inclus.

4. Utilisation de l'une des revendications 1 à 3, dans laquelle un anolyte comprenant une solution aqueuse est utilisé.

5. Utilisation de la revendication 4, dans laquelle la solution aqueuse est une solution aqueuse d'acide sulfurique, une solution aqueuse d'acide nitrique ou une solution aqueuse d'acide chlorhydrique ayant une conductivité ionique supérieure ou égale à 0,01 S/cm mesurée à 20 degrés C.
